# EUROPÄISCHE PATENTSCHRIFT

(11) **EP 3 237 775 B1**
(45) Veröffentlichungstag und Bekanntmachung des Hinweises auf die Patenterteilung: **07.12.2022**
(21) Anmeldenummer: 15820540.1
(22) Anmeldetag: 28.12.2015
(51) Int. Cl.: F16F 1/18, F16F 1/368

(54) **FEDER FÜR EIN FAHRZEUG**
SPRING FOR A VEHICLE
RESSORT POUR UN VÉHICULE

(30) Priorität: 23.02.2015 AT 982015
(43) Veröffentlichungstag der Anmeldung: 01.11.2017
(73) Patentinhaber: Hendrickson Commercial Vehicle Systems Europe GmbH, 8750 Judenburg (AT)
(72) Erfinder: MARTEAU-LORANT, Séverin, 25200 Grand-Charmont (FR); BROGLY, Sébastien, 90850 Essert (FR)
(74) Vertreter: Beer & Partner Patentanwälte KG
(86) Internationale Anmeldenummer: PCT/EP2015/081300
(87) Internationale Veröffentlichungsnummer: WO 2016/134810

(56) Entgegenhaltungen:
- DE-A1- 10 202 114
- DE-A1-102014 005 948
- DE-U1-202006 016 061
- JP-A- 2003 237 335
- US-A- 1 458 912
- US-A- 1 458 912

## Beschreibung

Die Erfindung betrifft eine Blattfeder, zur Verwendung im Zusammenhang mit einem Fahrzeug, mit einem Mittelbereich, wobei der Mittelbereich eine Mittelachse aufweist, sowie mit zwei Randbereichen, wobei die Randbereiche jeweils einen Endbereich aufweisen und wobei die Endbereiche ein Mittel zum Verbinden der Blattfeder mit einem Fahrgestell eines Fahrzeuges aufweisen.

Eine gattungsgemäße Feder ist aus DE 102 02 114 A1 bekannt. Weitere Federn sind aus DE 10 2014 005 948 A, US 1 458 912 A, DE 20 2006 016061 U1 und JP 2003 237335 A bekannt.

Im Fahrzeugbau ist es bekannt, die Räder und die Karosserie eines Fahrzeuges gegeneinander zu federn. Insbesondere bei besonders großen und schweren Fahrzeugen werden hierfür Blattfedern verwendet, da durch eine einfache Bauweise ein breites Spektrum von Belastungsanforderungen abgedeckt wird. Weiters können Blattfedern einfach gewartet und im Falle eines Gebrechens wieder einfach in Stand gesetzt werden.

Es ist aus dem Stand der Technik bekannt, Blattfedern zweiteilig auszuführen, wobei ein erster Teil eher geringere Kräfte aufnimmt, beispielsweise bei Betrieb ohne oder mit geringer Beladung, und ein zweiter Teil unterstützend wirkt, beispielsweise bei schwerer Beladung des mit der Blattfeder ausgestatteten Fahrzeugs. Durch diese Kombination von zwei Teilen wird eine günstige Veränderung der Federkennlinie erzielt. Allerdings ist der Übergang sprunghaft wenn der zweite Federteil wirksam wird, was sich negativ auf die Fahreigenschaften eines Fahrzeuges auswirkt, das mit einer solchen zweiteiligen Federung ausgestattet ist. Die Federkennlinie weist eine Knickstelle auf, welche sich insbesondere auf die Fahreigenschaften des Fahrzeuges nachteilig auswirkt.

Weiters haben solche zweiteiligen Blattfedern ein sehr viel höheres Gewicht als einteilige Ausführungsformen, was sich nachteilig auf den Energieverbrauch eines Fahrzeuges auswirkt, das mit einer solchen Federung ausgestattet ist. Außerdem steigt das Gesamtgewicht des Fahrzeuges, wodurch die höchst zulässige Zuladung sinkt.

Um den Übergang weicher zu gestalten, ist es aus dem Stand der Technik bekannt, statt einer zweiteiligen Bauweise der Blattfeder eine mehrteilige zu verwenden. Dadurch wird aber zum einen keine tatsächlich progressive Federkennlinie erreicht. Zum anderen werden die bekannten Probleme, welche sich durch ein hohes Eigengewicht der Feder ergeben, verstärkt.

Aus der DE 10 2013 107 889 A1 ist eine einteilige Blattfeder mit einer progressiven Kennlinie bekannt. Diese Feder kann vertikal auftretende Kraftkomponenten abfedern. Nachteilig ist jedoch, dass keine horizontal auftretenden Kraftkomponenten abgefedert werden können. Dies ist insbesondere nachteilig beim Bremsen des Fahrzeugs, da bei einem Bremsvorgang die Feder staucht, wobei durch die dabei auftretenden horizontalen Kraftkomponenten das Risiko erhöht ist, dass die Feder bricht.

Um der Längenveränderung einer Feder bei horizontal auftretenden Kraftkomponenten, insbesondere beim Bremsen, entgegen wirken zu können, ist es bekannt, die Feder (meist das in Einsatzposition hintere Ende der Feder) durch einen schwenkbar am Fahrzeuggestell angeordneten Schäkel mit dem Fahrzeuggestell zu verbinden. Das andere Ende der Feder ist meist ortsfest mit dem Fahrzeuggestell verbunden. Ein Schäkel bedeutet den Nachteil, dass ein zusätzliches Bauteil mit einem zusätzlichen Gewicht eingebaut werden muss.

Der Erfindung liegt daher die Aufgabe zu Grunde, die oben beschriebenen Nachteile zu überwinden.

Gelöst wird diese Aufgabe erfindungsgemäß durch eine Blattfeder mit den Merkmalen des Anspruches 1.

Bevorzugte und vorteilhafte Ausführungsformen der erfindungsgemäßen Feder sind Gegenstand der Unteransprüche. Die erfindungsgemäße Feder ist dadurch gekennzeichnet, dass im unbelasteten Zustand beide Randbereiche angrenzend zum Mittelbereich einen ersten Krümmungsbereich mit einer ersten Krümmungsrichtung und einem ersten Scheitelpunkt aufweisen, dass sich der erste Scheitelpunkt auf einer Seite der Mittelachse befindet, dass die Randbereiche in Richtung zu deren Endbereich hin einen zweiten Krümmungsbereich mit einer zweiten Krümmungsrichtung und einem zweiten Scheitelpunkt aufweisen, dass die zweite Krümmungsrichtung der ersten Krümmungsrichtung entgegengesetzt ist, dass sich der zweite Scheitelpunkt auf der dem ersten Scheitelpunkt gegenüberliegenden Seite der Mittelachse befindet und dass die Endbereiche der Randbereiche vom zweiten Scheitelpunkt weg hin zu der Seite geneigt sind, auf welcher sich der Mittelbereich befindet.

Durch die beschriebene Geometrie der Feder ergeben sich verschiedene Vorteile:
Eine erfindungsgemäß gefertigte Feder kann eine stark nichtlineare, insbesondere progressive, Kennlinie haben, was sich positiv auf die Fahreigenschaften eines Fahrzeuges auswirkt, das mit einer erfindungsgemäßen Federung ausgestattet ist.

Zudem kann eine erfindungsgemäße Feder nicht nur vertikale Kraftkomponenten abfedern, sondern auch horizontale Kraftkomponenten, welche insbesondere bei einem Bremsvorgang auftreten, da der erste Krümmungsbereich quasi als Feder in der Feder wirkt. Somit ist das Risiko, dass die Feder bricht, stark verringert. Zudem kann auf Schäkel verzichtet werden, da die Feder selbst der sonst auftretenden Längenveränderung entgegen wirkt. Da also vermieden werden kann, dass sich die gesamte Länge, d.h. der Abstand von einem Längsende zum anderen Längsende der Feder, überhaupt verändert, kann die Feder an beiden Enden ortsfest, z.B. über ein gerolltes Auge, am Fahrzeuggestell angeordnet sein.

Durch die beschriebene Geometrie der Feder wird eine funktionelle Verkürzung der wirksamen Länge der Feder bei steigender Belastung unterstützt.

Weiters kann bei einer einteiligen Ausführung der Blattfeder Material und Gewicht der Gesamtfederung gespart werden, was sowohl die Fertigung kostengünstiger macht, als auch das Gesamtgewicht des Fahrzeugs verringert.

Im Rahmen der Erfindung kann vorgesehen sein, dass der zweite Krümmungsbereich direkt anschließend zum ersten Krümmungsbereich angeordnet ist, wobei diese Bereiche ineinander übergehen.

In einer besonders bevorzugten Ausführungsform der Erfindung ist vorgesehen, dass eine Oberseite und eine Unterseite aufweist, wobei die Oberseite in Einbauposition im Fahrzeug zum Fahrzeuggestell hinweist, und dass die Feder der erste Scheitelpunkt auf der Seite der Mittelachse angeordnet ist, auf welcher sich die Unterseite befindet.

Im Rahmen der Erfindung können die Randbereiche symmetrisch oder asymmetrisch zueinander geformt sein. Der Vorteil einer asymmetrisch geformten Feder besteht darin, dass ein Randbereich relativ flach ausgeführt werden kann, d.h. ohne oder mit einem nur gering ausgeführten ersten Krümmungsbereich, wobei weniger Gefahr besteht, dass die Feder mit dem Fahrzeuggestell kollidiert. Horizontal auftretende Kraftkomponenten können dann durch den anderen Randbereich mit dem ersten Krümmungsbereich abgefedert werden.

Im Rahmen der Erfindung kann die Feder Federstahl oder Verbundwerkstoff enthalten. Vorteil von Federstahl gegenüber Verbundwerkstoff ist eine geringere Bruchgefahr der Feder.

In einer bevorzugten Ausführungsform der Erfindung ist vorgesehen, dass der dem Mittelbereich angrenzende Randbereich vom Ende des Mittelbereiches aus zum ersten Scheitelpunkt hin um einen Winkel(α) zur Mittelachse geneigt ist, wobei der Winkel (α) im Bereich von 1° bis 85°, bevorzugt im Bereich von 10° bis 60°, besonders bevorzugt im Bereich von 20° bis 45°, insbesondere 25° beträgt.

In einer weiteren bevorzugten Ausführungsform der Erfindung ist vorgesehen, dass vom ersten Scheitelpunkt bis zum zweiten Scheitelpunkt eine Scheitelpunktachse verläuft, die in einem Winkel (β) zur Mittelachse geneigt ist, wobei der Winkel (β) in einem Bereich von 1° bis 85°, bevorzugt im Bereich von 10° bis 70°, besonders bevorzugt im Bereich von 20° bis 60°, insbesondere im -Bereich von 45° bis 55° beträgt.

In einer weiteren bevorzugten Ausführungsform der Erfindung ist vorgesehen, dass wenigstens ein Endbereich um einen Winkel (γ) zur Mittelachse geneigt ist, wobei der Winkel (γ) im Bereich von -90° bis 90°, bevorzugt im Bereich von -60° bis 60°, besonders bevorzugt im Bereich von -10° bis 45° liegt, insbesondere 15° beträgt.

Es wird die Verwendung einer Feder vorgeschlagen, wobei ein am ersten Krümmungsbereich angreifender Kraftvektor im Wesentlichen parallel zur Mittelachse verläuft und ein am zweiten Krümmungsbereich angreifender Kraftvektor im Wesentlichen senkrecht zur Mittelachse verläuft.

Es wird zudem ein Fahrzeug mit einer erfindungsgemäßen Feder vorgeschlagen.

Bevorzugte und vorteilhafte Ausführungsformen der Erfindung ergeben sich aus der nachstehenden Beschreibung unter Bezugnahme auf die angeschlossenen Zeichnungen, in welchen bevorzugte Ausführungsformen dargestellt sind.

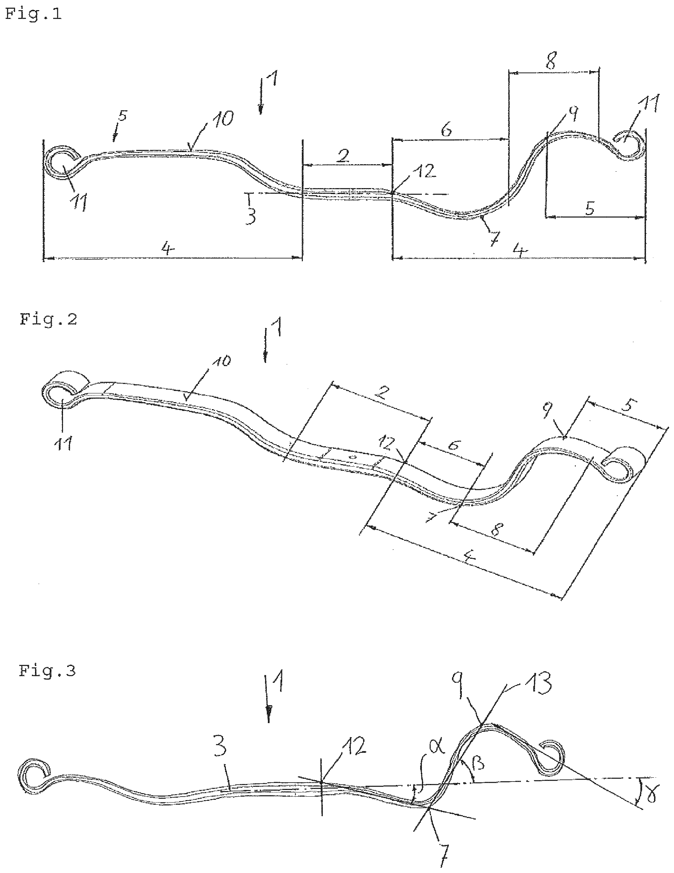

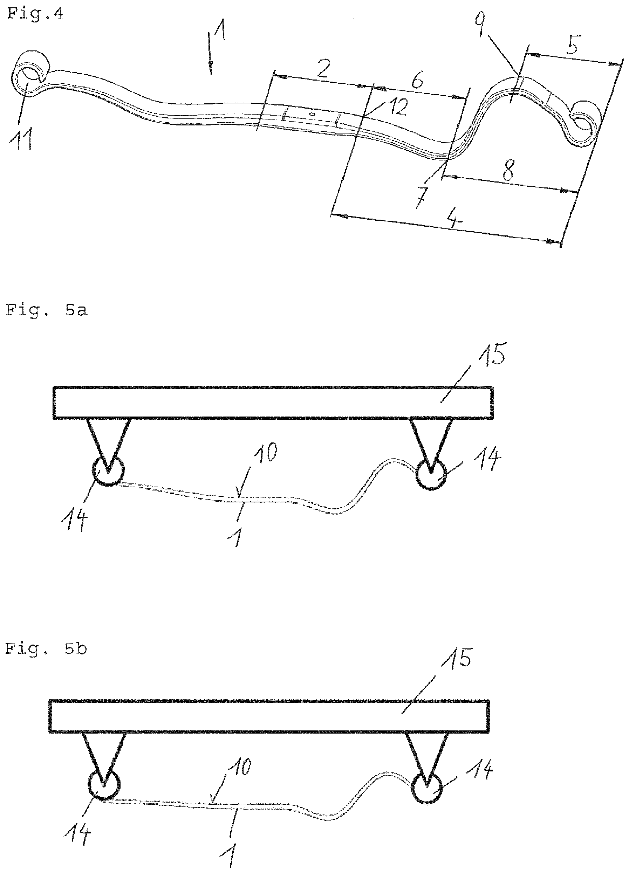

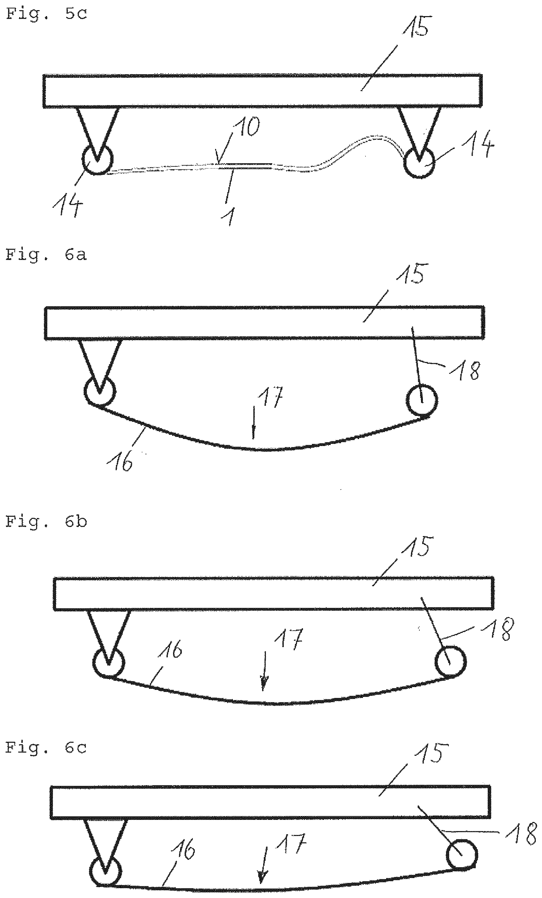

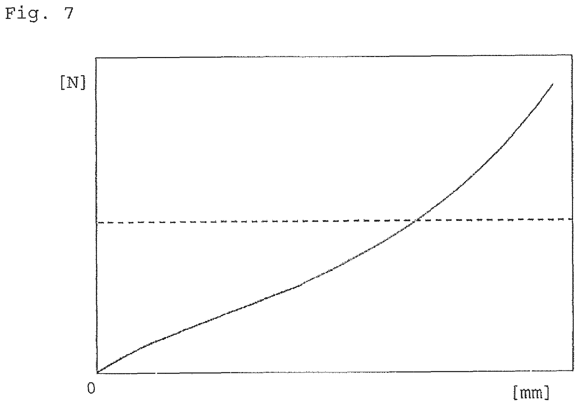

Es zeigt: Fig. 1 und 2 eine Ausführungsform einer nicht beanspruchten Feder, bei der der rechte Randbereich geformt ist wie bei einer erfindungsgemäßen Feder, Fig. 3 und 4 eine Ausführungsform einer erfindungsgemäßen Feder, Fig. 5a bis 5c eine Feder, bei der der rechte Randbereich geformt ist wie bei einer erfindungsgemäßen Feder, in unterschiedlichen Belastungszuständen, wobei die Anbindung an ein Fahrzeuggestell schematisch dargestellt ist, Fig. 6a bis 6c eine Feder gemäß dem Stand der Technik in den analog zu den Fig. 5a bis 5c dargestellten Belastungszuständen, wobei die Anbindung an ein Fahrzeuggestell schematisch dargestellt ist, und Fig. 7 die Federkennlinie der Feder gemäß den Fig. 5a bis 5c.

In den Fig. 3 und 4 sind Ausführungsformen einer erfindungsgemäßen Blattfeder 1 aus Federstahl in einem im Wesentlichen unbelasteten Zustand dargestellt. Die Blattfeder 1 weist jeweils einen Mittelbereich 2 mit einer Mittelachse 3 sowie zwei Randbereiche 4 auf. Die Randbereiche 4 weisen jeweils einen Endbereich 5 auf. Gemäß den Fig. 1 bis 4 weist der rechte Randbereich 4 angrenzend zum Mittelbereich 2 einen ersten Krümmungsbereich 6 mit einer ersten Krümmungsrichtung und einem ersten Scheitelpunkt 7 auf, wobei sich der erste Scheitelpunkt 7 auf der unteren Seite der Mittelachse 3 befindet. Dieser Randbereich 4 weist in Richtung zu dessen Endbereich 5 hin anschließend einen zweiten Krümmungsbereich 8 mit einer zweiten Krümmungsrichtung und einem zweiten Scheitelpunkt 9 auf, wobei die zweite Krümmungsrichtung der ersten Krümmungsrichtung entgegengesetzt ist und wobei sich der zweite Scheitelpunkt 9 auf der oberen Seite der Mittelachse 3 befindet. Der Endbereich 5 des rechten Randbereichs 4 ist vom zweiten Scheitelpunkt 9 weg hin zu der Seite geneigt, auf welcher sich der Mittelbereich 2 befindet.

Die in den Fig. 1 bis 4 dargestellte obere Seite der Blattfeder 1 ist deren Oberseite 10, die in Einbauposition im Fahrzeug zum Fahrzeuggestell hinweist.

Die Endbereiche 5 weisen jeweils ein Mittel 11 zum Verbinden der Blattfeder 1 mit einem Fahrgestell eines Fahrzeuges auf, wobei diese Mittel 11 im gezeigten Ausführungsbeispiel gerollte Augen sind. Bei der erfindungsgemäßen Blattfeder 1 können auch andere Mittel 11 zum Verbinden der Blattfeder 1 mit dem Fahrgestell eines Fahrzeuges vorgesehen sein. Je nach Art der Blattfeder 1 können beide Mittel 11 ein Auge sein. Es kann auch ein Mittel 11 ein gerolltes oder angeformtes, z.B. ein im Endbereich 5 eingebrachtes, Auge sein, wogegen der andere Endbereich 5 an Stelle des Auges im Wesentlichen flach verlaufen kann.

In der erfindungsgemäßen Ausführungsform gemäß den Fig. 3 und 4 ist der dem Mittelbereich 2 angrenzende Randbereich 4 vom Ende 12 des Mittelbereiches 2 aus zum ersten Scheitelpunkt 7 hin um einen Winkel (α) von ca. 20° zur Mittelachse 3 geneigt. Vom ersten Scheitelpunkt 7 bis zum zweiten Scheitelpunkt 9 verläuft eine Scheitelpunktachse 13, die in einem Winkel (β) von ca. 55° zur Mittelachse 3 geneigt ist. Der rechte Endbereich 5 ist um einen Winkel (γ) zur Mittelachse 3 geneigt, auf welcher sich der Mittelbereich 2 befindet, wobei der Winkel (γ) ca. 25° beträgt.

Fig. 5a bis 5c zeigen, wie eine Blattfeder 1 ausgehend von Fig. 5a hin zu Fig. 5c bei steigender Belastung verformt wird. Fig. 5a entspricht einem im Wesentlichen unbelasteten Zustand. Fig. 5b entspricht einem Zustand mit einer Nominalbelastung, in welchem das Fahrzeug steht. Fig. 5c entspricht einem Zustand starker Belastung, in welchem das Fahrzeug bewegt wird.

In Fig. 5a hat die wirksame Länge der Blattfeder 1 im Wesentlichen die gesamte Länge der Blattfeder 1, da die Blattfeder 1 über die gesamte Länge in nennenswertem Ausmaß federt. Bei steigender Belastung neigt sich der rechte Randbereich 4, insbesondere dessen Endbereich 5, stärker zum Mittelbereich 2, d.h. der Randbereich 4 neigt sich stärker zur Mittelachse 3 hin. Durch den bezüglich der Längsrichtung des Endbereiches in kleinerem Winkel dort angreifenden, vertikalen Kraftvektor wird das Biegemoment im Randbereich kleiner, so dass der Randbereich 4 weniger federt. Dadurch verkürzt sich die wirksame Länge der Blattfeder 1. Durch die Verkürzung der wirksamen Länge der Blattfeder 1 in Zusammenhang mit der steigenden Belastung entsteht eine progressive Federkennlinie, wie sie beispielhaft in Fig. 7 dargestellt ist. Die Federrate nimmt also kontinuierlich mit steigender Belastung und abhängig von dieser zu.

Von Fig. 5a bis 5c verkürzt sich zwar die wirksame Länge der Blattfeder 1, jedoch bleibt die gesamte Länge der Blattfeder 1, d.h. der Abstand vom ersten Ende zum zweiten Ende der Blattfeder 1, durch den ersten Krümmungsbereich 6 im Wesentlichen unverändert. Somit kann die Blattfeder 1 an beiden Längsenden über eine Blattfederaufnahme 14 ortsfest mit einem Fahrzeuggestell 15 verbunden sein.

Von Fig. 5a bis 5c verändert sich die Lage des Mittelbereiches 2 in der Art, dass sich dieser bei steigender Belastung dem Fahrzeuggestell 15 annähert. Die Form der Blattfeder 1 verändert sich dabei in der Art, dass der erste Krümmungsbereich 6 immer flacher verläuft, wobei der Winkel (γ) immer kleiner wird, wobei ebenfalls der Winkel (β) kleiner wird.

Fig. 6a bis 6c zeigen eine Blattfeder 16 gemäß dem Stand der Technik in den analog zu den Fig. 5a bis 5c dargestellten Belastungszuständen, wobei ebenfalls die Anbindung an ein Fahrzeuggestell 15 schematisch dargestellt ist. Wie ersichtlich, nähert sich der Mittelbereich 17 der Blattfeder 16 bei steigender Belastung dem Fahrzeuggestell 15 an. Dadurch verändert sich bei steigender Belastung die gesamte Länge der Blattfeder 16, wobei sich der Abstand vom ersten Ende zum zweiten Ende der Blattfeder 16 bei steigender Belastung erhöht. Somit kann die Blattfeder 16 nicht an beiden Längsenden über eine Blattfederaufnahme 14 ortsfest mit einem Fahrzeuggestell 15 verbunden sein. In den Fig. 6a bis 6c ist nur das linke Ende der Blattfeder 16 über eine Blattfederaufnahme 14 ortsfest mit dem Fahrzeuggestell 15 verbunden. Das rechte Ende der Blattfeder 16 (meist das in Einsatzposition hintere Ende) ist mit einem schwenkbar am Fahrzeuggestell angeordneten Schäkel 17 verbunden.

In Fig. 7 ist eine progressive Federkennlinie der Blattfeder 1 gemäß den Fig. 5a bis 5c dargestellt. Diese Federkennlinie weist keine Knickstelle, welche sich insbesondere auf die Fahreigenschaften des Fahrzeuges nachteilig auswirkt, auf. Der Verlauf der Federkennlinie bis zum Punkt 17 kann im Wesentlichen einem Belastungszustand gemäß Fig. 5b zugeordnet werden. Der Verlauf der Federkennlinie ab dem Punkt 17 kann im Wesentlichen einem Belastungszustand gemäß Fig. 5c zugeordnet werden.

## Patentansprüche

1. Blattfeder (1) zur Verwendung im Zusammenhang mit einem Fahrzeug, mit einem Mittelbereich (2), wobei der Mittelbereich (2) eine Mittelachse (3) aufweist, sowie mit zwei Randbereichen (4), wobei die Randbereiche (4) jeweils einen Endbereich (5) aufweisen und wobei die Endbereiche (5) ein Mittel (11) zum Verbinden der Blattfeder (1) mit einem Fahrgestell eines Fahrzeuges aufweisen, wobei im unbelasteten Zustand beide Randbereiche (4) angrenzend zum Mittelbereich (2) einen ersten Krümmungsbereich (6) mit einer ersten Krümmungsrichtung und einem ersten Scheitelpunkt (7) aufweisen, wobei sich der erste Scheitelpunkt (7) auf einer Seite der Mittelachse (3) befindet, wobei die Randbereiche (4) in Richtung zu deren Endbereich (5) hin einen zweiten Krümmungsbereich (8) mit einer zweiten Krümmungsrichtung und einem zweiten Scheitelpunkt (9) aufweisen, wobei die zweite Krümmungsrichtung der ersten Krümmungsrichtung entgegengesetzt ist, **dadurch gekennzeichnet, dass** sich der zweite Scheitelpunkt (9) auf der dem ersten Scheitelpunkt (7) gegenüberliegenden Seite der Mittelachse (3) befindet und dass die Endbereiche (5) der Randbereiche (4) vom zweiten Scheitelpunkt (9) weg hin zu der Seite geneigt sind, auf welcher sich der Mittelbereich (2) befindet.

2. Feder nach Anspruch 1, **dadurch gekennzeichnet, dass** der zweite Krümmungsbereich (8) anschließend zum ersten Krümmungsbereich (6) angeordnet ist.

3. Feder nach Anspruch 1 oder 2, **dadurch gekennzeichnet, dass** sie eine Oberseite (10) und eine Unterseite aufweist, wobei die Oberseite (10) in Einbauposition im Fahrzeug zum Fahrzeuggestell hinweist, und dass der erste Scheitelpunkt (7) auf der Seite der Mittelachse (3) angeordnet ist, auf welcher sich die Unterseite befindet.

4. Feder nach einem der Ansprüche 1 bis 3, **dadurch gekennzeichnet, dass** die Randbereiche (4) symmetrisch oder asymmetrisch zueinander geformt sind.

5. Feder nach einem der Ansprüche 1 bis 4, **dadurch gekennzeichnet, dass** sie Federstahl und/oder Verbundwerkstoff enthält.

6. Feder nach einem der Ansprüche 1 bis 5, **dadurch gekennzeichnet, dass** der dem Mittelbereich (2) angrenzende Randbereich (4) vom Ende (12) des Mittelbereiches (2) aus zum ersten Scheitelpunkt (7) hin um einen Winkel (α) zur Mittelachse (3) geneigt ist, wobei der Winkel (α) im Bereich von 1° bis 85°, bevorzugt im Bereich von 10° bis 60°, besonders bevorzugt im Bereich von 20° bis 45°, insbesondere 25° beträgt.

7. Feder nach einem der Ansprüche 1 bis 6, **dadurch gekennzeichnet, dass** vom ersten Scheitelpunkt (7) bis zum zweiten Scheitelpunkt (9) eine Scheitelpunktachse (13) verläuft, die in einem Winkel (β) zur Mittelachse (3) geneigt ist, wobei der Winkel (β) in einem Bereich von 1° bis 85°, bevorzugt im Bereich von 10° bis 70°, besonders bevorzugt im Bereich von 20° bis 60°, insbesondere im Bereich von 45° bis 55° beträgt.

8. Feder nach einem der Ansprüche 1 bis 7, **dadurch gekennzeichnet, dass** wenigstens ein Endbereich (5) um einen Winkel (γ) zur Mittelachse (3) geneigt ist, wobei der Winkel (γ) im Bereich von -90° bis 90°, bevorzugt im Bereich von -60° bis 60°, besonders bevorzugt im Bereich von -10° bis 45° liegt, insbesondere 15° beträgt.

9. Verwendung einer Feder nach einem der Ansprüche 1 bis 8, **dadurch gekennzeichnet, dass** ein am ersten Krümmungsbereich (6) angreifender Kraftvektor im Wesentlichen parallel zur Mittelachse (3) verläuft und ein am zweiten Krümmungsbereich (8) angreifender Kraftvektor im Wesentlichen senkrecht zur Mittelachse (3) verläuft.

10. Fahrzeug, **gekennzeichnet durch** wenigstens eine Feder nach einem der Ansprüche 1 bis 8.

## Claims

1. Leaf spring (1) for use in connection with a vehicle, having a central region (2), wherein the central region (2) has a central axis (3), and having two edge regions (4), wherein the edge regions (4) each have an end region (5), and wherein the end regions (5) have a means (11) for connecting the leaf spring (1) to a chassis of a vehicle, wherein, in the unloaded state, both edge regions (4) have, adjacent to the central region (2), a first curvature region (6) with a first direction of curvature and a first vertex (7), wherein the first vertex (7) is located on one side of the central axis (3), wherein the edge regions (4) have, in the direction towards the end region (5) thereof, a second curvature region (8) with a second direction of curvature and a second vertex (9), wherein the second curvature direction is opposite to the first curvature direction, **characterized in in that** the second vertex (9) is located on the side of the central axis (3) opposite the first vertex (7), and **in that** the end regions (5) of the edge regions (4) are inclined away from the second vertex (9) towards the side on which the central region (2) is located.

2. Spring according to claim 1, **characterized in that** the second curvature region (8) is arranged adjacent to the first curvature region (6).

3. Spring according to claim 1 or 2, **characterized in that** it has an upper side (10) and a lower side, wherein the upper side (10) faces the vehicle chassis in the installation position in the vehicle, and **in that** the first vertex (7) is arranged on the side of the central axis (3) on which the lower side is located.

4. Spring according to one of claims 1 to 3, **characterized in that** the edge regions (4) are shaped symmetrically or asymmetrically with respect to one another.

5. Spring according to one of claims 1 to 4, **characterized in that** it contains spring steel and/or composite material.

6. Spring according to one of claims 1 to 5, **characterized in that** the edge region (4) adjacent to the central region (2) is inclined from the end (12) of the central region (2) towards the first vertex (7) by an angle (α) with respect to the central axis (3), wherein the angle (α) is in the range from 1° to 85°, preferably in the range from 10° to 60°, particularly preferably in the range from 20° to 45°, in particular 25°.

7. Spring according to one of claims 1 to 6, **characterized in that** a vertex axis (13) extends from the first vertex (7) to the second vertex (9) and is inclined at an angle (β) to the central axis (3), wherein the angle (β) is in the range from 1° to 85°, preferably in the range from 10° to 70°, particularly preferably in the range from 20° to 60°, in particular in the range from 45° to 55°.

8. Spring according to one of claims 1 to 7, **characterized in that** at least one end region (5) is inclined at an angle (γ) to the central axis (3), wherein the angle (γ) is in the range from -90° to 90°, preferably in the range from -60° to 60°, particularly preferably in the range from -10° to 45°, in particular 15°.

9. Use of a spring according to one of claims 1 to 8, **characterized in that** a force vector acting on the first curvature region (6) extends essentially parallel to the central axis (3) and a force vector acting on the second curvature region (8) extends essentially perpendicularly to the central axis (3).

10. Vehicle, **characterized by** at least one spring according to one of claims 1 to 8.

## Revendications

1. Ressort à lames (1) à utiliser en relation avec un véhicule, avec une région médiane (2), laquelle région médiane (2) présente un axe médian (3), et avec deux régions de bord (4), lesquelles régions de bord (4) présentent chacune une région d'extrémité (5), les régions d'extrémité (5) comportant un moyen (11) pour relier le ressort à lames (1) à un châssis d'un véhicule, dans lequel, dans l'état non contraint, les deux régions de bord (4) présentent à la limite de la région médiane (2) une première région incurvée (6) avec un premier sens de courbure et un premier sommet (7), dans lequel le premier sommet (7) se trouve d'un côté de l'axe médian (3), dans lequel les régions de bord (4) présentent en direction de leur région d'extrémité (5) une deuxième région incurvée (8) avec un deuxième sens de courbure et un deuxième sommet (9), dans lequel le deuxième sens de courbure est opposé au premier sens de courbure, **caractérisé en ce que** le deuxième sommet (9) se trouve sur le côté de l'axe médian (3) opposé au premier sommet (7) et **en ce que** les régions d'extrémité (5) des régions de bord (4) sont inclinées en s'écartant du deuxième sommet (9) vers le côté où se trouve la région médiane (2).

2. Ressort selon la revendication 1, **caractérisé en ce que** la deuxième région incurvée (8) est disposée à la suite de la première région incurvée (6).

3. Ressort selon la revendication 1 ou 2, **caractérisé en ce qu'**il présente une face supérieure (10) et une face inférieure, la face supérieure (10) étant tournée vers le châssis du véhicule dans la position de montage dans le véhicule, et **en ce que** le premier sommet (7) se trouve sur le côté de l'axe médian (3) sur lequel se trouve la face inférieure.

4. Ressort selon l'une des revendications 1 à 3, **caractérisé en ce que** les régions de bord (4) ont une forme symétrique ou asymétrique l'un de l'autre.

5. Ressort selon l'une des revendications 1 à 4, **caractérisé en ce qu'**il contient de l'acier à ressorts et/ou un matériau composite.

6. Ressort selon l'une des revendications 1 à 5, **caractérisé en ce que** la région de bord (4) limitrophe de la région médiane (2) est inclinée à partir de l'extrémité (12) de la région médiane (2) vers le premier sommet (7) d'un angle (α) par rapport à l'axe médian (3), l'angle (α) étant compris entre 1° et 85°, de préférence entre 10° et 60°, en particulier entre 20° et 45°, tout particulièrement de 25°.

7. Ressort selon l'une des revendications 1 à 6, **caractérisé en ce qu'**un axe des sommets (13) formant un angle (β) par rapport à l'axe médian (3) va du premier sommet (7) au deuxième sommet (9), l'axe (β) étant compris entre 1° et 85°, de préférence entre 10° et 70°, en particulier entre 20° et 60°, tout particulièrement entre 45° et 55°.

8. Ressort selon l'une des revendications 1 à 7, **caractérisé en ce qu'**au moins une région d'extrémité (5) est inclinée d'un angle (γ) par rapport à l'axe médian (3), l'angle (γ) étant compris entre -90° et 90°, de préférence entre -60° et 60°, en particulier entre -10° et 45°, tout particulièrement de 15°.

9. Utilisation d'un ressort selon l'une des revendications 1 à 8, **caractérisée en ce qu'**un vecteur de force agissant sur le premier région incurvée (6) est sensiblement parallèle à l'axe médian (3) et un vecteur de force agissant sur le deuxième région incurvée (8) est sensiblement perpendiculaire à l'axe médian (3).

10. Véhicule, **caractérisé en ce qu'**il comporte au moins un ressort selon l'une des revendications 1 à 8.
